# EUROPEAN PATENT APPLICATION

(11) **EP 4 571 889 A1**
(43) Date of publication of application: **18.06.2025**
(21) Application number: 23852536.4
(22) Date of filing: 07.08.2023
(51) Int. Cl.: H01M 4/62, C08F 212/08, C08F 220/10, C08L 25/14, C08L 71/02, H01M 4/13, H01M 4/139

(54) **NON-AQUEOUS SECONDARY BATTERY BINDER POLYMER, NON-AQUEOUS SECONDARY BATTERY BINDER COMPOSITION, AND NON-AQUEOUS SECONDARY BATTERY ELECTRODE**

(30) Priority: 09.08.2022 JP 2022126956
(71) Applicant: Resonac Corporation, Tokyo 105-7325 (JP)
(72) Inventor: KAWAHARA Yuta, Tokyo 1057325 (JP); IKEHATA Ryohsuke, Tokyo 1057325 (JP); HORIKOSHI Hideo, Tokyo 1057325 (JP)
(74) Representative: Strehl & Partner mbB
(86) International application number: PCT/JP2023/028770
(87) International publication number: WO 2024/034574

(57) **Abstract**

A non-aqueous secondary battery binder polymer including a first structural unit derived from a monomer (a1), a second structural unit derived from a monomer (a2), and a third structural unit derived from a monomer (a3), wherein the monomer (a1) is a non-ionic compound having only one ethylenically unsaturated bond, the monomer (a2) is a compound having a carboxy group and only one ethylenically unsaturated bond, and the monomer (a3) is a polyrotaxane including a cyclic molecule having a cyclic framework to which a group containing an ethylenically unsaturated bond is bonded and a chain molecule that passes through an openings of the cyclic molecule and has stopper groups at both ends.

## Description

### TECHNICAL FIELD

The present invention relates to a non-aqueous secondary battery binder polymer, a non-aqueous secondary battery binder composition, a non-aqueous secondary battery electrode, a non-aqueous secondary battery and a method of producing a non-aqueous secondary battery binder polymer.

Priority is claimed on Japanese Patent Application No. 2022-126956, filed August 9, 2022, the content of which is incorporated herein by reference.

### BACKGROUND ART

Non-aqueous secondary batteries can be made small and lightweight and thus are widely used as power sources for laptop computers, mobile phones, electric tools, electronic and communication devices and the like. In recent years, non-aqueous secondary batteries have also been used as power sources for electric vehicles and hybrid vehicles. A typical example of a non-aqueous secondary battery is a lithium ion secondary battery.

A non-aqueous secondary battery includes a positive electrode using a metal oxide or the like as an active material, a negative electrode using a carbon material such as graphite as an active material, and an electrolyte solution. The positive electrode and the negative electrode each includes a current collector and an electrode active material layer formed on the current collector. The electrode active material layer usually contains a binder that bonds the active material together and bonds the active material and the current collector, and fixes the electrode active material layer on the current collector.

In the related art, as binders used in non-aqueous secondary batteries, those disclosed in Patent Document 1 and Patent Document 2 are known.

Patent Document 1 describes a secondary battery electrode binder composition containing 100 parts by mass of at least one polymer water dispersion selected from the group consisting of a styrene butadiene copolymer latex and an acrylic emulsion, and 1 to 20 parts by mass of a compound having a cloud point of 70°C or lower.

Patent Document 2 describes a lithium ion secondary battery electrode binder having a glass transition temperature of 30°C or lower obtained by emulsion polymerization of ethylenically unsaturated monomers containing, as essential components, 15 to 70 mass% of styrene with respect to the total amount of ethylenically unsaturated monomers, an ethylenically unsaturated carboxylic acid ester, an ethylenically unsaturated carboxylic acid and an internal cross-linking agent in the presence of a surfactant.

In addition, Patent Document 3 describes a paint resin emulsion that can be suitably used for building exterior paints and the like. Patent Document 3 discloses a paint resin emulsion, the resin constituting the paint resin emulsion has a glass transition temperature of 0°C or higher, and contains 0.01 to 4 mass% of a structural unit derived from a modified polyrotaxane, and the modified polyrotaxane has a structure in which a functional group having a radically polymerizable group is bonded to cyclic molecules of a polyrotaxane including cyclic molecules and a chain molecule that passes through openings of the cyclic molecules and has stopper groups at both ends.

### Citation List

### Patent Document

Patent Document 1: Japanese Unexamined Patent Application, First Publication No. 2014-239070
Patent Document 2: Japanese Unexamined Patent Application, First Publication No. 2011-243464
Patent Document 3: Japanese Unexamined Patent Application, First Publication No. 2019-116594

### SUMMARY OF INVENTION

### Technical Problem

In recent years, there has been a strong demand for non-aqueous secondary batteries with a higher output, a higher capacity, a longer lifespan and the like. Binders used in the non-aqueous secondary batteries are required to be able to improve cycle characteristics of the non-aqueous secondary batteries including electrodes using the binders.

The present invention has been made in view of the above circumstances, and an object of the present invention is to provide a non-aqueous secondary battery binder polymer that can be used as a binder material to form an electrode to obtain a non-aqueous secondary battery having excellent cycle characteristics, a non-aqueous secondary battery binder composition including the non-aqueous secondary battery binder polymer, a non-aqueous secondary battery electrode slurry, and a method of producing a non-aqueous secondary battery binder polymer.

In addition, an object of the present invention is to provide a non-aqueous secondary battery electrode containing the non-aqueous secondary battery binder polymer of the present invention and to obtain a non-aqueous secondary battery having excellent cycle characteristics, and a non-aqueous secondary battery including the non-aqueous secondary battery electrode.

### Solution to Problem

The present invention includes the following aspects.

A first aspect of the present invention provides the following non-aqueous secondary battery binder polymer.
[1] A non-aqueous secondary battery binder polymer, including:
   a first structural unit derived from a monomer (a1);
   a second structural unit derived from a monomer (a2); and
   a third structural unit derived from a monomer (a3),
   wherein the monomer (a1) is a non-ionic compound having only one ethylenically unsaturated bond,
   the monomer (a2) is a compound having a carboxy group and only one ethylenically unsaturated bond, and
   the monomer (a3) is a polyrotaxane including a cyclic molecule having a cyclic framework to which a group containing an ethylenically unsaturated bond is bonded and a chain molecule that passes through an opening of the cyclic molecule and has stopper groups at both ends.

The non-aqueous secondary battery binder polymer according to the first aspect of the present invention preferably has the following features [2] to [16]. It is also preferable to arbitrarily combine two or more of the following features [2] to [16].
[2] The non-aqueous secondary battery binder polymer according to [1],
   wherein at least one of the group containing an ethylenically unsaturated bond bonded to the cyclic framework is a (meth)acryloyl group, a vinyl group, an allyl group, or a propenyl group.
[3] The non-aqueous secondary battery binder polymer according to [1],
   wherein at least one of the group containing an ethylenically unsaturated bond bonded to the cyclic framework is a (meth)acryloyl group.
[4] The non-aqueous secondary battery binder polymer according to any one of [1] to [3],
   wherein at least one of the cyclic framework in the cyclic molecule of the monomer (a3) is a crown ether framework, a cyclic siloxane framework, or a cyclic oligosaccharide framework.
[5] The non-aqueous secondary battery binder polymer according to any one of [1] to [3],
   wherein at least one of the cyclic framework in the cyclic molecule of the monomer (a3) is an α-cyclodextrin framework.
[6] The non-aqueous secondary battery binder polymer according to any one of [1] to [5],
   wherein at least one of the stopper groups is a dinitrophenyl group, an adamantyl group, a trityl group, or a derivative group of any of these groups.
[7] The non-aqueous secondary battery binder polymer according to any one of [1] to [5],
   wherein at least one of the stopper groups is an adamantyl group.
[8] The non-aqueous secondary battery binder polymer according to any one of [1] to [7],
   wherein the chain molecule is at least one selected from among polyethylene glycol, polypropylene glycol, polyisoprene, polyisobutylene, polybutadiene, polytetrahydrofuran, polyacrylic acid ester, polydimethylsiloxane, polyethylene, and polypropylene.
[9] The non-aqueous secondary battery binder polymer according to any one of [1] to [7],
   wherein the chain molecule is polyethylene glycol.
[10] The non-aqueous secondary battery binder polymer according to any one of [1] to [9],
   wherein the number-average molecular weight of the chain molecule is 5,000 to 50,000.
[11] The non-aqueous secondary battery binder polymer according to any one of [1] to [10], further including a fourth structural unit derived from a monomer (a4),
   wherein the monomer (a4) is a compound having a plurality of independent ethylenically unsaturated bonds.
[12] The non-aqueous secondary battery binder polymer according to [11],
   wherein the content of the fourth structural unit in all structural units is 0.010 mass% or more and 10 mass% or less.
[13] The non-aqueous secondary battery binder polymer according to any one of [1] to [12],
   wherein at least one of the monomers (a1) is an aromatic compound having an ethylenically unsaturated bond, and
   wherein the content of the structural unit derived from the aromatic compound having an ethylenically unsaturated bond in all structural units is 41 mass% or more.
[14] The non-aqueous secondary battery binder polymer according to any one of [1] to [13],
   wherein the content of the second structural unit in all structural units is 0.10 mass% or more and 20 mass% or less.
[15] The non-aqueous secondary battery binder polymer according to any one of [1] to [14],
   wherein the content of the third structural unit in all structural units is 0.010 mass% or more and 15 mass% or less.
[16] The non-aqueous secondary battery binder polymer according to any one of [1] to [15],
   wherein the content of the third structural unit in all structural units is 4.1 mass% or more.

A second aspect of the present invention provides the following non-aqueous secondary battery binder composition.
A non-aqueous secondary battery binder composition, including dispersed particles containing the non-aqueous secondary battery binder polymer according to any one of [1] to [16], and an aqueous medium.

The non-aqueous secondary battery binder composition according to the second aspect of the present invention preferably has the following feature [18].
The non-aqueous secondary battery binder composition according to [17], wherein the average particle diameter d50 of the dispersed particles is 0.18 µm or more and 1.0 µm or less.

A third aspect of the present invention provides the following non-aqueous secondary battery electrode slurry.
A non-aqueous secondary battery electrode slurry, including
the non-aqueous secondary battery binder polymer according to any one of [1] to [16], an electrode active material, and an aqueous medium,
wherein the aqueous medium is one selected from the group consisting of water, a hydrophilic solvent, and a mixture containing water and a hydrophilic solvent.

A fourth aspect of the present invention provides the following non-aqueous secondary battery electrode.
A non-aqueous secondary battery electrode including the non-aqueous secondary battery binder polymer according to any one of [1] to [16].

The non-aqueous secondary battery electrode according to the fourth aspect of the present invention preferably has the following feature [21].
A non-aqueous secondary battery including the non-aqueous secondary battery electrode according to [20].

A fifth aspect of the present invention provides the following method of producing a non-aqueous secondary battery binder polymer.
A method of producing a non-aqueous secondary battery binder polymer, including
a polymerization step in which monomers including a monomer (a1), a monomer (a2), and a monomer (a3) are copolymerized,
wherein the monomer (a1) is a non-ionic compound having only one ethylenically unsaturated bond,
the monomer (a2) is a compound having a carboxy group and only one ethylenically unsaturated bond, and
the monomer (a3) is a polyrotaxane including a cyclic molecule having a cyclic framework to which a group containing an ethylenically unsaturated bond is bonded and a chain molecule that passes through an opening of the cyclic molecule and has stopper groups at both ends.

### Advantageous Effects of Invention

According to the present invention, it is possible to provide a non-aqueous secondary battery binder polymer that can be used as a binder material to form an electrode to obtain a non-aqueous secondary battery having excellent cycle characteristics, and a method of producing the same.

In addition, according to the present invention, it is possible to provide a non-aqueous secondary battery binder composition and a non-aqueous secondary battery electrode slurry to obtain a non-aqueous secondary battery having excellent cycle characteristics.

In addition, according to the present invention, it is possible to provide a non-aqueous secondary battery electrode to obtain a non-aqueous secondary battery having excellent cycle characteristics and a non-aqueous secondary battery having excellent cycle characteristics, which includes the non-aqueous secondary battery electrode.

### BRIEF DESCRIPTION OF DRAWINGS

[FIG. 1] A schematic cross-sectional view illustrating a function of a binder formed of a non-aqueous secondary battery binder polymer of the present invention in a non-aqueous secondary battery electrode of the present invention.
[FIG. 2] A schematic view illustrating a polyrotaxane used as a raw material of the non-aqueous secondary battery binder polymer of the present invention.

### DESCRIPTION OF EMBODIMENTS

The inventors conducted extensive studies as follows in order to achieve the above object and realize a binder that can form a non-aqueous secondary battery electrode to obtain a non-aqueous secondary battery having excellent cycle characteristics.

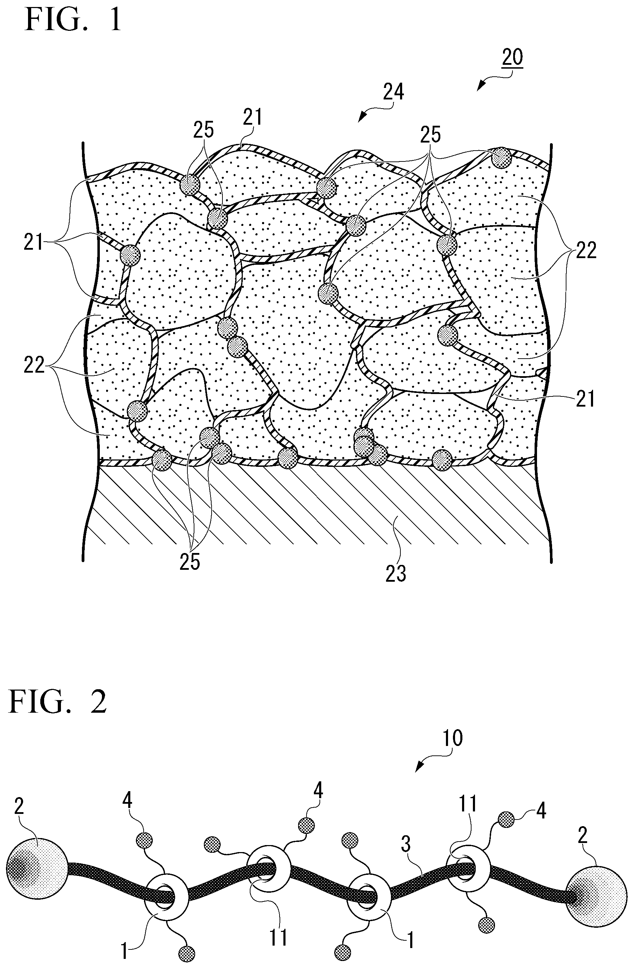

FIG. 1 is a schematic cross-sectional view illustrating a function of a binder formed of a non-aqueous secondary battery binder polymer of the present invention in a non-aqueous secondary battery electrode of the present invention.

A non-aqueous secondary battery electrode (hereinafter sometimes referred to as an "electrode") 20 shown in FIG. 1 includes a current collector 23 formed of a copper foil and an electrode active material layer 24 formed on the current collector 23. In one embodiment, the electrode active material layer 24 includes an electrode active material 22, a thickener 21, and a binder 25.

The discharge capacity of the non-aqueous secondary battery including the electrode 20 decreases when the electrode active material layer 24 of the electrode 20 expands and contracts, and peels off from the current collector 23 due to the use of the non-aqueous secondary battery, that is, expansion and contraction of the electrode active material 22 caused by charging and discharging. In addition, even if the electrode active material layer 24 does not peel off from the current collector 23, the discharge capacity of the non-aqueous secondary battery decreases when the adhesion between the electrode active materials 22 and between the electrode active material 22 and the current collector 23 becomes insufficient due to expansion and contraction of the electrode active material 22.

Therefore, the binder 25 is preferably one that can maintain adhesion between the electrode active materials 22 and between the electrode active material 22 and the current collector 23 for a long time and can form the electrode 20 in which the electrode active material layer 24 is unlikely to peel off from the current collector 23.

However, in the related art, since the toughness of the binder 25 is insufficient, the binder 25 cannot conform with respect to expansion and contraction of the electrode active material 22 due to charging and discharging.

The plurality of electrode active material particles 22 contained in the electrode active material layer 24 expand and contract in random directions. Therefore, most of the binder 25 contained in the electrode active material layer 24 is disposed between the electrode active material particles 22 which expand and contract in different directions and between the current collector 23 and the electrode active material 22 which expand and contract in different directions. Therefore, unless the binder 25 has sufficient conformability with respect to each of a plurality of materials that expand and contract in different directions and are in contact with each other via the binder 25, favorable adhesion cannot be obtained. On the other hand, for example, when a coating film containing a binder but not containing an electrode active material 22 is formed on a substrate, the binder in the coating film only needs to conform in a direction in which the substrate expands and contracts. For this reason, even if the binder can be used as a material of a coating film that is unlikely to peel off from a substrate, it does not necessarily have sufficient conformability to obtain the adhesion between the electrode active materials 22 and between the electrode active material 22 and the current collector 23 and it does not necessarily mean that the electrode active material layer 24 containing the binder and the electrode active material 22 is unlikely to peel off from the current collector 23.

Therefore, in the related art, it was difficult to realize the binder 25 in which the adhesion between the electrode active materials 22 and between the electrode active material 22 and the current collector 23 was favorable and the electrode active material layer 24 was unlikely to peel off from the current collector 23.

Therefore, the inventors conducted extensive studies focusing on a binder containing, as a polymer to easily obtain an electrode active material layer 24 that is unlikely to peel off from a current collector 23 formed of a copper foil, a polymer obtained by copolymerizing a monomer (a1) formed of a non-ionic compound having only one ethylenically unsaturated bond and a monomer (a2) formed of a compound having an anionic functional group and only one ethylenically unsaturated bond.

As a result, it was found that a polymer obtained by copolymerizing monomers including a monomer (a1), a monomer (a2), and a monomer (a3) composed of a polyrotaxane 10 shown in FIG. 2 can be used as a non-aqueous secondary battery binder.

FIG. 2 is a schematic view illustrating a polyrotaxane used as a raw material of the non-aqueous secondary battery binder polymer of the present invention.

The polyrotaxane 10 shown in FIG. 2 includes cyclic molecules 1 having a cyclic framework to which groups 4 containing an ethylenically unsaturated bond are bonded and a chain molecule 3 that passes through openings 11 of the cyclic molecules 1 and has stopper groups 2 at both ends. Hereinafter, the actions and functions speculated by the inventors will be described.

In the polymer obtained by copolymerizing the monomers including the monomer (a1), the monomer (a2), and the monomer (a3) composed of the polyrotaxane 10 shown in FIG. 2, the cyclic molecules 1 contained in the structural unit derived from the polyrotaxane 10 are movable with respect to the chain molecule 3. Accordingly, in the polymer, when stress is applied to the polymer, the cross-linking points between the cyclic molecules 1 in the polyrotaxane 10 and the cross-linking points between the cyclic molecules 1 and the monomer (a1) and/or the monomer (a2) in the polymer move relative to the chain molecule 3 (pulley effect), and stress is distributed. In addition, when the non-crosslinked cyclic molecules 1 in the polymer move due to stress applied to the polymer, and the distance between the non-crosslinked cyclic molecules 1 on the chain molecule 3 becomes shorter, the polymer exhibits an air spring effect of maintaining the distance between the non-crosslinked cyclic molecules 1 on the chain molecule 3 and is restored to its original state.

Therefore, the binder formed of the polymer has conformability resulting from the structural unit derived from the polyrotaxane 10 with respect to expansion and contraction of the electrode active material 22 associated wtih the use of a non-aqueous secondary battery. As a result, it is speculated that the electrode active material layer 24 containing the binder formed of the polymer has the following functions <1> and <2>.
<1> Due to conformability resulting from the structural unit derived from the polyrotaxane 10, the holding power of the electrode active material 22 by the binder 25 present between the electrode active materials 22 and between the electrode active material 22 and the current collector 23 in the electrode active material layer 24 increases, and even if the electrode active material 22 expands and contracts, the adhesion between the electrode active materials 22 and between the electrode active material 22 and the current collector 23 is maintained for a long time.
<2> Even if the electrode active material layer 24 expands and contracts according to expansion and contraction of the electrode active material 22, due to the conformability resulting from the structural unit derived from the polyrotaxane 10, the adhesion to the current collector 23 resulting from the structural units derived from the monomer (a1) and the monomer (a2) is effectively exhibited, and the electrode active material layer 24 is unlikely to peel off from the current collector 23.

In addition, the inventors produced an electrode using the polymer as a non-aqueous secondary battery binder, and confirmed that it is possible to form an electrode in which the adhesion between the electrode active materials and between the electrode active material and the current collector is favorable and the electrode active material layer is unlikely to peel off from the current collector, and a non-aqueous secondary battery including this electrode has excellent cycle characteristics and completed the present invention.

Hereinafter, a non-aqueous secondary battery binder polymer, a method of producing the same, a non-aqueous secondary battery binder composition, a non-aqueous secondary battery electrode slurry, a non-aqueous secondary battery electrode and a non-aqueous secondary battery of the present invention will be described in detail. The present invention is not limited to the following embodiments. For example, in the present invention, the numbers, amounts, positions, ratios, materials, configurations, types, orders and the like can be added, omitted, substituted, and changed without departing from the spirit of the present invention.

The following terms used in this specification will be described.

The term "(meth)acryl" is a general term for acryl and methacryl. The term "(meth)acrylate" is a general term for acrylate and methacrylate.

Unless otherwise specified, "ethylenically unsaturated bond" is an ethylenically unsaturated bond having radical polymerizability.

In a polymer using a compound having an ethylenically unsaturated bond, the structural unit derived from the compound having an ethylenically unsaturated bond may be a structural unit in which a chemical structure of a moiety other than the ethylenically unsaturated bond in the compound is the same as a chemical structure of a moiety other than the moiety corresponding to the ethylenically unsaturated bond of the structural unit in the polymer. The ethylenically unsaturated bond of the compound may be converted into a single bond when a polymer is formed. For example, in a polymer of methyl methacrylate, the structural unit derived from methyl methacrylate is represented by - CH₂-C(CH₃)(COOCH₃)-.

In the case of a polymer of a compound having an ionic functional group and an ethylenically unsaturated bond, for example
e, a structural unit having an ionic functional group such as a carboxy group, like a second structural unit to be described below, may be considered as a structural unit derived from the same ionic compound regardless of whether a part of the functional group is ion-exchanged or not ion-exchanged. For example, the structural unit represented by -CH₂-C(CH₃)(COONa)- may also be considered as a structural unit derived from methacrylic acid.

In addition, in the case of a compound having a plurality of independent ethylenically unsaturated bonds, as a structural unit of a polymer of the compound, one or more ethylenically unsaturated bonds may remain in the structural unit. For example, in the case of a polymer of divinylbenzene, the structural unit derived from divinylbenzene may be a structure having no ethylenically unsaturated bond (a form in which both moieties corresponding to two ethylenically unsaturated bonds of divinylbenzene are incorporated into the polymer chain) or a structure having one ethylenically unsaturated bond (a form in which only a moiety corresponding to one of the ethylenically unsaturated bonds is incorporated into the polymer chain). The plurality of independent ethylenically unsaturated bonds are a plurality of ethylenically unsaturated bonds that do not form a conjugated diene with each other.

In addition, after polymerization, when a moiety other than the chain structure corresponding to an ethylenically unsaturated bond in the polymer, for example, a functional group such as a carboxy group, no longer corresponds to the chemical structure of the monomer due to a chemical reaction, the structural unit of the polymer is a structural unit derived from a compound having an ethylenically unsaturated bond in the polymer. For example, when vinyl acetate is polymerized and then saponified, the structural unit of the polymer is the structural unit derived from vinyl alcohol, not the structural unit derived from vinyl acetate, based on the chemical structure of the polymer.

In the present embodiment, when the name of a compound is expressed in the plural, it refers to a group of compounds including the compound structure, and includes the compound having a substituent.

### <1. Non-aqueous secondary battery binder polymer (P)>

A non-aqueous secondary battery binder polymer of the present embodiment is a polymer used for a non-aqueous secondary battery binder, and may be referred to as a "binder polymer (P)" hereinafter. The binder polymer (P) of the present embodiment includes at least a first structural unit derived from the following monomer (a1), a second structural unit derived from the following monomer (a2), and a third structural unit derived from the following monomer (a3).

The binder polymer (P) of the present embodiment may include, in addition to the first structural unit, the second structural unit, and the third structural unit, a fourth structural unit derived from a monomer (a4) that does not correspond to any of the monomer (a1) to the monomer (a3) and formed of a compound having a plurality of independent ethylenically unsaturated bonds and/or a fifth structural unit derived from another monomer (a5) that does not correspond to any of the monomer (a1) to the monomer (a4).

### [First structural unit]

The first structural unit in the binder polymer (P) of the present embodiment is derived from the monomer (a1).

The monomer (a1) is a non-ionic compound having only one ethylenically unsaturated bond. That is, the monomer (a1) is a compound having neither an anionic functional group nor a cationic functional group. The monomer (a1) may be only one type of compound or a combination of two or more types of compounds.

As the monomer (a1), it is preferable to use at least one of a (meth)acrylic acid ester and an aromatic compound having an ethylenically unsaturated bond, and it is more preferable to use a combination of both compounds. The (meth)acrylic acid ester is more preferably a (meth)acrylic acid alkyl ester. The number of carbon atoms in the alkyl group in the (meth)acrylic acid alkyl ester is preferably 1 to 20. In this case, a monomer (a1) other than a (meth)acrylic acid alkyl ester and aromatic compound having an ethylenically unsaturated bond, which will be described below, may be used in combination.

Examples of (meth)acrylic acid alkyl esters contained in the (meth)acrylic acid ester used as the monomer (a1) include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, and stearyl (meth)acrylate. Among these, it is preferable to include 2-ethylhexyl acrylate since a binder polymer (P) that can form an electrode active material layer having excellent electrolyte resistance can be obtained.

Examples of aromatic compounds having an ethylenically unsaturated bond used as the monomer (a1) include styrene, t-butylstyrene, α-methylstyrene, p-methylstyrene, and 1,1-diphenylethylene. When the monomer (a1) contains an aromatic vinyl compound, it is more preferable that the monomer (a1) contain at least one of styrene and α-methylstyrene, and it is still more preferable that the monomer (a1) contain styrene since a binder polymer (P) having excellent dispersibility in an aqueous medium can be obtained.

Examples of monomers (a1) other than the (meth)acrylic acid alkyl ester and the aromatic compound having an ethylenically unsaturated bond include a compound having an ethylenically unsaturated bond and a polar functional group, an aliphatic hydrocarbon compound having an ethylenically unsaturated bond, and an alicyclic hydrocarbon compound having an ethylenically unsaturated bond.

The polar functional group in the compound having an ethylenically unsaturated bond and a polar functional group used as the monomer (a1) preferably includes at least one of a hydroxy group and a cyano group, and more preferably includes a hydroxy group.

Examples of compounds having an ethylenically unsaturated bond and a polar functional group used as the monomer (a1) include 2-hydroxyethyl (meth)acrylate, 2-hydroxypropyl (meth)acrylate, and (meth)acrylonitrile, and it is preferable to include 2-hydroxyethyl methacrylate because good polymerization stability can be obtained when the binder polymer (P) is produced.

### [Second structural unit]

The second structural unit in the binder polymer (P) of the present embodiment is derived from the monomer (a2).

The monomer (a2) is a compound having only one ethylenically unsaturated bond and having a carboxy group. The monomer (a2) may be only one type of compound or a combination of two or more types of compounds.

As the monomer (a2), a compound having a plurality of carboxy groups in one molecule may be used. That is, the binder polymer (P) may contain a plurality of carboxy groups in one structural unit.

Examples of monomers (a2) having a carboxy group include unsaturated monocarboxylic acids such as methacrylic acid, acrylic acid, and crotonic acid; and unsaturated dicarboxylic acids such as itaconic acid and fumaric acid. Among these, it is preferable to use at least one of acrylic acid, methacrylic acid, and itaconic acid because the monomer (a2) forms the binder polymer (P) that can form an electrode in which the electrode active material layer is unlikely to peel off from the current collector.

At least some of the structural units derived from the monomer (a2) may form a salt with a basic substance. Examples of monomers (a2) that form a salt include metal salts and ammonium salts of the monomer (a2). Examples of metals in the metal salts include alkali metals such as lithium, sodium, and potassium. Examples of specific compounds include lithium (meth)acrylate, lithium itaconate, dilithium itaconate, sodium (meth)acrylate, sodium itaconate, disodium itaconate, ammonium (meth)acrylate, ammonium itaconate, and diammonium itaconate.

### [Third structural unit]

The third structural unit in the binder polymer (P) of the present embodiment is derived from the monomer (a3). As shown in FIG. 2, the monomer (a3) is a polyrotaxane including a cyclic molecule 1 and a chain molecule 3 that passes through opening 11 of the cyclic molecule 1. The cyclic molecule 1 has a cyclic framework to which groups 4 containing an ethylenically unsaturated bond are bonded. The chain molecule 3 has stopper groups 2 at both ends.

The monomer (a3) may contain only one type of polyrotaxane or may contain two or more types of polyrotaxanes.

As shown in FIG. 2, the cyclic molecule 1 in the polyrotaxane 10 has an opening 11 through which the chain molecule 3 can pass. The cyclic molecule 1 being penetrated by the chain molecule 3 can move along the chain molecule 3. The number of cyclic molecules 1 in one molecule of polyrotaxane 10 is not particularly limited, and may be, for example, 1 to 500, 5 to 300, or 10 to 200. 2 to 20, 3 to 40, 7 to 60, and 15 to 100 may be additionally exemplified. When the number of cyclic molecules 1 is plural, the cyclic molecules 1 in the polyrotaxane 10 may be of only one type or of two or more types.

At least one of the cyclic frameworks of the cyclic molecules 1 is preferably a crown ether framework, a cyclic siloxane framework, or a cyclic oligosaccharide framework. Among these, the cyclic framework is more preferably a cyclic oligosaccharide framework because excellent reactivity can be obtained when the binder polymer (P) is polymerized. Among the cyclic oligosaccharide frameworks, an α-cyclodextrin framework is particularly preferable because more preferable reactivity can be obtained.

At least one of the groups 4 containing an ethylenically unsaturated bond bonded to the cyclic framework of the cyclic molecule 1 is preferably a (meth)acryloyl group, a vinyl group, an allyl group, or a propenyl group, more preferably a (meth)acryloyl group because excellent reactivity can be obtained when the binder polymer (P) is polymerized, and still more preferably an acryloyl group because more preferable reactivity can be obtained.

The group 4 containing an ethylenically unsaturated bond bonded to the cyclic framework may be bonded directly to the cyclic framework. In addition, the group 4 containing an ethylenically unsaturated bond bonded to the cyclic framework may be bonded to the cyclic framework via any linking group.

The number of groups 4 containing an ethylenically unsaturated bond bonded to the cyclic framework of the cyclic molecule 1 may be one or plural. When the number of groups 4 containing an ethylenically unsaturated bond bonded to the cyclic framework is plural, for example, 50 or less is preferable, and 40 or less is more preferable. The number may be, for example, 1 to 30, 2 to 20, or 5 to 10. In the present embodiment, since the number of groups 4 containing an ethylenically unsaturated bond bonded to the cyclic framework of the cyclic molecule 1 in the polyrotaxane 10 is 1 or more, the cross-linking points between the cyclic molecules 1 in the polyrotaxanes 10 and the cross-linking points between the cyclic molecule 1 and the monomer (a1) and/or the monomer (a2) are movable relative to the chain molecule 3. As a result, a binder polymer (P) having conformability with respect to expansion and contraction of the electrode active material 22 can be obtained. When the number of groups 4 containing an ethylenically unsaturated bond bonded to the cyclic framework of the cyclic molecule 1 is 50 or less, this is preferable because the crosslinking density of the binder polymer (P) becomes favorable.

The cyclic framework of the cyclic molecule 1 may have not only the group 4 containing an ethylenically unsaturated bond but also substituents other than the group 4 containing an ethylenically unsaturated bond.

Examples of other substituents include various organic groups. Examples of organic groups include a hydrocarbon group having one or more carbon atoms, which may have a substituent. The number-average molecular weight of the cyclic molecule 1 can be selected arbitrarily.

The chain molecules 3 in the polyrotaxane 10 may be linear or branched.

The chain molecule 3 is preferably, for example, at least one selected from among polyethylene glycol, polypropylene glycol, polyisoprene, polyisobutylene, polybutadiene, polytetrahydrofuran, polyacrylic acid ester, polydimethylsiloxane, polyethylene, and polypropylene, and more preferably polyethylene glycol because it has a favorable function of encapsulating the cyclic molecule 1 in the polyrotaxane 10.

The number-average molecular weight of the chain molecule 3 is preferably 5,000 to 50,000 and more preferably 7,500 to 40,000, and may be 10,000 to 30,000 or 15,000 to 25,000. When the number-average molecular weight of the chain molecule 3 is 5,000 or more, the length of the chain molecule 3 can be sufficiently secured. Therefore, in the binder polymer (P), the distance at which the cross-linking points between the cyclic molecules 1 and the cross-linking points between the cyclic molecule 1 in the polyrotaxane 10 and the monomer (a1) and/or the monomer (a2) are movable relative to the chain molecule 3 becomes sufficiently long. As a result, a binder polymer (P) having more preferable conformability with respect to expansion and contraction of the electrode active material can be obtained. When the number-average molecular weight of the chain molecule 3 is 50,000 or less, this is preferable because the crosslinking density of the binder polymer (P) becomes favorable.

The stopper group 2 in the polyrotaxane 10 has a function of preventing the cyclic molecule 1 from coming off the chain molecule 3 due to its bulkiness and iconicity. The stopper groups 2 disposed at both ends of the chain molecule 3 may be the same as or different from each other.

Examples of stopper groups 2 that prevent the cyclic molecule 1 from coming off the chain molecule 3 due to its bulkiness include a group having a ring structure. At least one of the stopper groups 2 is preferably a dinitrophenyl group, an adamantyl group, a trityl group, or a derivative group of any of these groups, and more preferably an adamantyl group (may be either a 1-adamantyl group or a 2-adamantyl group) because excellent reactivity can be obtained when the binder polymer (P) is polymerized. The stopper group 2 may further have a substituent. Examples of substituents that the stopper group 2 may have include an alkyl group, alkyloxy group, hydroxy group, halogen group, cyano group, sulfonyl group, carboxy group, amino group, and phenyl group.

The polyrotaxane 10 can be produced by a known method.

Commercially available products may be used as the polyrotaxane 10. Examples of commercially available polyrotaxanes 10 include "SeRM (registered trademark) Super polymer SM3403P," "SeRM (registered trademark) Super polymer SM1313P," "SeRM (registered trademark) Super polymer SA3403P," "SeRM (registered trademark) Super polymer SA2403P," "SeRM (registered trademark) Super polymer SA1313P," "SeRM (registered trademark) Super polymer SM3405P," "SeRM (registered trademark) Key Mixture SM3400C," "SeRM (registered trademark) Super polymer SA3405P," "SeRM (registered trademark) Super polymer SA2405P," "SeRM (registered trademark) Key Mixture SA3400C," "SeRM (registered trademark) Key Mixture SA2400C," "SeRM (registered trademark) Super polymer SA3405P," and "SeRM (registered trademark) Super polymer SA2405P", which are commercially available from Advanced Softmaterials Inc.

Among these commercially available polyrotaxanes 10, SeRM (registered trademark) Key Mixture SA2400C, which is a polyrotaxane 10 including cyclic molecules 1 having a cyclic framework composed of an α-cyclodextrin framework to which an acryloyl group, which is a group 4 containing an ethylenically unsaturated bond, is bonded, and a chain molecule 3 having adamantyl groups as the stopper groups 2 at both ends and made of a polyethylene glycol having a number-average molecular weight of 20,000, is preferable because excellent reactivity can be obtained when the binder polymer (P) is polymerized.

### [Fourth structural unit]

The binder polymer (P) of the present embodiment may have a fourth structural unit as an optional structural unit. The fourth structural unit is derived from the monomer (a4). The monomer (a4) is a compound having a plurality of independent ethylenically unsaturated bonds. "Independent" means that they are not conjugated double bonds such as those in 1,3-butadiene. Therefore, the monomer (a4) is a compound that can form a cross-linked structure in radical polymerization with the monomer (a1), the monomer (a2) and the monomer (a3). The monomer (a4) does not correspond to any of the monomer (a1), the monomer (a2), and the monomer (a3). As the monomer (a4), only one type of compound may be used or two or more different types of compounds may be used.

Examples of monomers (a4) include compounds having two ethylenically unsaturated bonds such as divinylbenzene, ethylene glycol di(meth)acrylate, 1,6-hexanediol di(meth)acrylate, and 2-hydroxy-3-acryloyloxypropyl methacrylate, and compounds having three or more ethylenically unsaturated bonds such as trimethylolpropane tri(meth)acrylate. As the monomer (a4), it is preferable to use at least one of divinylbenzene and trimethylolpropane triacrylate because good polymerization stability can be obtained when the binder polymer (P) is produced.

### [Other monomer (a5)]

The other monomer (a5) is a monomer that does not correspond to any of the monomer (a1), the monomer (a2), the monomer (a3), and the monomer (a4). Examples of other monomers (a5) include a compound having only one ethylenically unsaturated bond and an anionic functional group other than a carboxy group, such as a sulfo group or a phosphate group, a surfactant having an ethylenically unsaturated bond (hereinafter sometimes referred to as a "polymerizable surfactant"), and a compound having an ethylenically unsaturated bond and functioning as a silane coupling agent, but the present invention is not limited thereto.

Examples of compounds having only one ethylenically unsaturated bond and a sulfo group include an aromatic vinyl compound having a sulfo group and an aromatic vinyl compound having a sulfo group that forms salts. Among these, it is preferable to use at least one of parastyrene sulfonic acid and parastyrene sulfonate, and it is more preferable to use parastyrene sulfonate. It is still more preferable to use sodium p-styrenesulfonate because good polymerization stability can be obtained when the binder polymer (P) is produced.

As the polymerizable surfactant, which is an example of the other monomer (a5), a compound having an ethylenically unsaturated bond and functioning as a surfactant can be used.

Examples of polymerizable surfactants include compounds represented by the following chemical formulae (1) to (4).

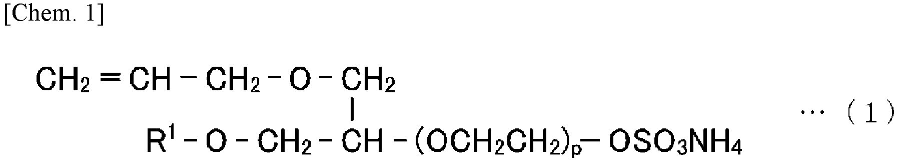

In Formula (1), R¹ is an alkyl group. p is an integer of 10 to 40. R¹ is preferably an alkyl group having 10 to 40 carbon atoms and more preferably a linear unsubstituted alkyl group having 10 to 40 carbon atoms.

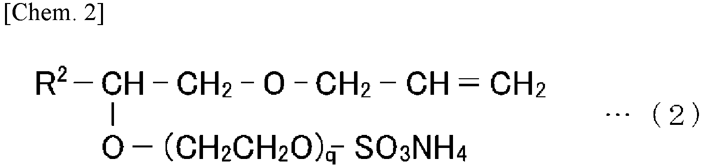

In Formula (2), R² is an alkyl group. q is an integer of 10 to 12. R² is preferably an alkyl group having 10 to 40 carbon atoms, and more preferably a linear unsubstituted alkyl group having 10 to 40 carbon atoms. Examples of compounds represented by Formula (4) include polyoxyethylene alkyl ether sulfates (Aqualon KH-10, commercially available from DKS Co., Ltd.).

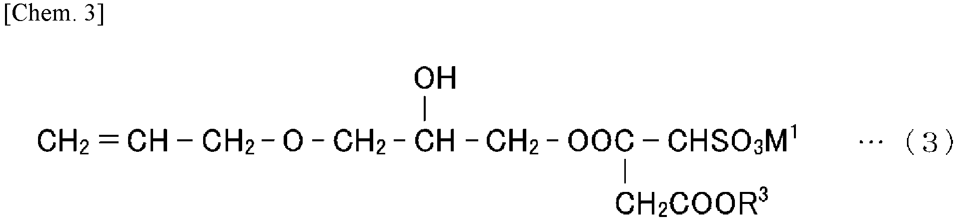

In Formula (3), R³ is an alkyl group. M¹ is NH₄ or Na. R³ is preferably an alkyl group having 10 to 40 carbon atoms and more preferably a linear unsubstituted alkyl group having 10 to 40 carbon atoms.

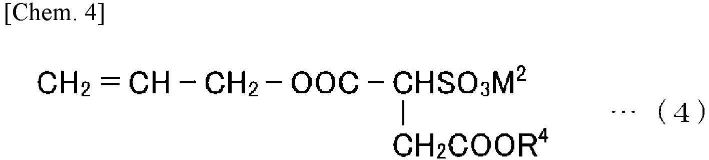

In Formula (4), R⁴ is an alkyl group. M² is NH₄ or Na. R⁴ is preferably an alkyl group having 10 to 40 carbon atoms and more preferably a linear unsubstituted alkyl group having 10 to 40 carbon atoms.

Examples of compounds having an ethylenically unsaturated bond and functioning as a silane coupling agent, which is an example of the other monomer (a5), include vinyltrimethoxysilane, γ-methacryloxypropyltrimethoxysilane, vinyltriethoxysilane, and γ-methacryloxypropyltriethoxysilane.

### [Content of each structural unit in binder polymer (P)]

In the binder polymer (P) of the present embodiment, the content of each structural unit in the binder polymer (P) is considered to be the same as the content of each monomer in the total amount of the monomer components used in the production of the binder polymer (P).

### (Content of first structural unit in all structural units)

The content of the first structural unit in all structural units (that is, the content of the monomer (a1) in the total amount of the monomer components used in the production of the binder polymer (P)) is preferably 60 mass% or more, more preferably 70 mass% or more, still more preferably 75 mass% or more, and particularly preferably 80 mass% or more. This is because more preferable polymerization stability can be obtained when the binder polymer (P) is produced. The content of the first structural unit in all structural units is preferably 97 mass% or less, more preferably 95 mass% or less, and still more preferably 93 mass% or less. This is because the binder polymer (P) can form an electrode in which the electrode active material layer is unlikely to peel off from the current collector.

Regarding the composition of the monomer (a1), it is preferable to appropriately adjust the type and amount of the compound in order to adjust the glass transition point of the binder polymer (P) or adjust the polymerization rate according to the molecular design.

Specifically, when the monomer (a1) contains an aromatic compound having an ethylenically unsaturated bond, the content of the structural unit derived from the aromatic compound having an ethylenically unsaturated bond in all structural units is preferably 36 mass% or more, more preferably 41 mass% or more, and still more preferably 43 mass% or more. This is because, when a non-aqueous secondary battery electrode slurry containing the binder polymer (P) is produced, a binder polymer (P) having excellent dispersibility can be obtained.

### (Content of second structural unit in all structural units)

The content of the second structural unit in all structural units (that is, the content of the monomer (a2) in the total amount of the monomer components used in the production of the binder polymer (P)) is preferably 0.10 mass% or more, more preferably 1.0 mass% or more, still more preferably 3.0 mass%, and particularly preferably 4.0 mass% or more. This is because an electrode in which the electrode active material layer is unlikely to peel off from the current collector can be formed. The content of the second structural unit in all structural units is preferably 20 mass% or less, more preferably 15 mass% or less, and still more preferably 10 mass% or less. This is because more preferable polymerization stability can be obtained when the binder polymer (P) is produced. The content of the second structural unit in all structural units may be, for example, 2.0 mass% or more and 12 mass% or less, or 5.0 mass% or more and 8 mass% or less.

### (Content of third structural unit in all structural units)

The content of the third structural unit in all structural units (that is, the content of the monomer (a3) in the total amount of the monomer components used in the production of the binder polymer (P)) is preferably 0.010 mass% or more, more preferably 0.050 mass% or more, and still more preferably 0.10 mass% or more. The content of the third structural unit in all structural units may be 0.50 mass% or more, 1.0 mass% or more, 1.5 mass% or more, 2.0 mass% or more, 3.0 mass% or more, 3.5 mass% or more, 4.1 mass% or more, or 5.0 mass% or more. This is because, when the amount of third structural units contained in all structural units is sufficient, the crosslinking density between the cyclic molecules 1 in the polyrotaxanes 10 and the crosslinking density between the cyclic molecule 1 and the monomer (a1) and/or the monomer (a2) are sufficiently high, and a binder polymer (P) having excellent conformability with respect to expansion and contraction of the electrode active material 22 can be obtained. Therefore, the binder polymer (P) containing 0.010 mass% or more of the third structural unit can form the electrode 20 in which the electrode active material layer 24 is unlikely to peel off from the current collector 23, and can be used as a binder material to obtain a non-aqueous secondary battery having more preferable cycle characteristics.

The content of the third structural unit in all structural units is preferably 15 mass% or less, more preferably 12 mass% or less, still more preferably 10 mass% or less, and particularly preferably 9.0 mass% or less. This is because it is easy to obtain a binder polymer (P) in which the first structural unit and the second structural unit are sufficiently contained in all structural units.

### (Content of fourth structural unit in all structural units)

When the binder polymer (P) of the present embodiment includes a fourth structural unit, the content of the fourth structural unit in all structural units (that is, the content of the monomer (a4) in the total amount of the monomer components used in the production of the binder polymer (P)) is preferably 0.010 mass% or more, more preferably 0.020 mass% or more, and still more preferably 0.030 mass% or more. This is because the significant effect of the monomer (a4) as an internal cross-linking agent can be obtained, deterioration of the binder polymer (P) is minimized, and a binder polymer (P) that can be used as a binder material to obtain a non-aqueous secondary battery having more preferable cycle characteristics can be obtained. The content of the fourth structural unit in all structural units is preferably 10 mass% or less, more preferably 5.0 mass% or less, still more preferably 1.0 mass% or less, and particularly preferably 0.1 mass% or less. This is because gelling of the binder polymer (P) can be curbed. The content of the fourth structural unit in all structural units may be, for example, 0.015 mass% or more and 0.8 mass% or less, 0.025 mass% or more and 0.5 mass% or less, 0.035 mass% or more and 0.2 mass% or less, or 0.040 mass% or more and 0.080 mass% or less.

### (Content of fifth structural unit in all structural units)

When the binder polymer (P) of the present embodiment includes a fifth structural unit derived from another monomer (a5), and the other monomer (a5) is a compound having only one ethylenically unsaturated bond and a sulfo group, the content of the fifth structural unit in all structural units (that is, the content of the monomer (a5) in the total amount of the monomer components used in the production of the binder polymer (P)) is preferably 0.10 mass% or more, more preferably 0.20 mass% or more, and still more preferably 0.30 mass% or more. This is because good polymerization stability can be obtained when the binder polymer (P) is produced. The content of the fifth structural unit in all structural units is preferably 5.0 mass% or less, more preferably 3.0 mass% or less, and still more preferably 1.0 mass% or less. This is because the particle diameter, viscosity and the like of the binder polymer (P) can be appropriately adjusted.

When the binder polymer (P) of the present embodiment includes a fifth structural unit derived from another monomer (a5), and the other monomer (a5) is a polymerizable surfactant, the content of the fifth structural unit in all structural units (that is, the content of the monomer (a5) in the total amount of the monomer components used in the production of the binder polymer (P)) is preferably 0.10 mass% or more, more preferably 0.20 mass% or more, and still more preferably 0.30 mass% or more. This is because the effect obtained by incorporating the polymerizable surfactant becomes significant, and good polymerization stability can be obtained when the binder polymer (P) is produced. The content of the fifth structural unit in all structural units is preferably 5.0 mass% or less, more preferably 3.0 mass% or less, and still more preferably 1.0 mass% or less. This is because the particle diameter, viscosity and the like of the binder polymer (P) can be appropriately adjusted. The content of the fifth structural unit in all structural units may be, for example, 0.50 mass% or more and 2.0 mass% or less, or 0.80 mass% or more and 1.5 mass% or less.

### [Glass transition point Tg of binder polymer (P)]

The glass transition point Tg of the binder polymer (P) of the present embodiment is a peak top temperature of a DDSC chart obtained by performing DSC measurement using a differential scanning calorimetry (DSC) device (EXSTAR DSC/SS7020, commercially available from Hitachi High-Tech Science Corporation) at a temperature increase rate of 10°C/min under a nitrogen gas atmosphere, and obtained as a temperature differential of the DSC.

The glass transition point Tg of the binder polymer (P) is preferably -30°C or higher, more preferably -20°C or higher, and still more preferably -10°C or higher. This is because a non-aqueous secondary battery including an electrode containing a non-aqueous secondary battery binder containing a binder polymer (P) has excellent cycle characteristics.

The glass transition point Tg of the binder polymer (P) is preferably 100°C or lower, more preferably 50°C or lower, and still more preferably 40°C or lower. This is because the film formation property of the binder polymer (P) is improved, and a non-aqueous secondary battery including an electrode containing a non-aqueous secondary battery binder containing a binder polymer (P) has excellent cycle characteristics.

The glass transition point Tg of the binder polymer (P) may be, for example, -10 to 30°C or -5 to 25°C.

The number-average molecular weight of the binder polymer (P) can be selected arbitrarily.

### [Method of producing binder polymer (P)]

For example, the binder polymer (P) of the present embodiment can be produced by copolymerizing monomers including the monomer (a1), the monomer (a2), the monomer (a3), and as necessary, the monomer (a4) which is a compound having a plurality of independent ethylenically unsaturated bonds and/or the other monomer (a5) (polymerization step). The monomers (monomers (a1) to (a5)) used to synthesize the binder polymer (P) may be collectively referred to as monomers (a).

Examples of methods of copolymerizing the monomers (a) include an emulsion polymerization method in which the monomers (a) are emulsion-polymerized in an aqueous medium (b). When the binder polymer (P) is produced by the emulsion polymerization method, in addition to the monomers (a) and the aqueous medium (b), components such as a non-polymerizable surfactant (c), a basic substance (d), a radical polymerization initiator (e), a chain transfer agent (f) and the like can be used.

### [Aqueous medium (b)]

The aqueous medium (b) is one selected from the group consisting of water, a hydrophilic solvent, and a mixture containing water and a hydrophilic solvent. Examples of hydrophilic solvents include methanol, ethanol, isopropyl alcohol, and N-methylpyrrolidone. The aqueous medium (b) is preferably water in consideration of polymerization stability. As the aqueous medium (b), a mixture in which a hydrophilic solvent is added to water may be used as long as the polymerization stability is not impaired.

### [Non-polymerizable surfactant (c)]

When the binder polymer (P) is produced by the emulsion polymerization method, the non-polymerizable surfactant (c) may be incorporated into a solution containing the aqueous medium (b) and the monomers (a) and emulsion polymerization may be performed. That is, the non-polymerizable surfactant (c) is a surfactant (c) that has no polymerizable unsaturated bond in its chemical structure. The surfactant (c) improves the dispersion stability of the solution during emulsion polymerization and/or the dispersion liquid (emulsion) obtained after polymerization. As the surfactant (c), it is preferable to use an anionic surfactant or a non-ionic surfactant.

Examples of anionic surfactants include alkylbenzene sulfonates, alkyl sulfates, polyoxyethylene alkyl ether sulfates, and fatty acid salts.

Examples of non-ionic surfactants include polyoxyethylene alkyl ether, polyoxyethylene alkyl phenyl ether, polyoxyethylene polycyclic phenyl ether, polyoxyalkylene alkyl ether, sorbitan fatty acid ester, and polyoxyethylene sorbitan fatty acid ester.

The surfactants (c) may be used alone or two or more thereof may be used in combination.

### [Basic substance (d)]

When the binder polymer (P) is produced by the emulsion polymerization method, the basic substance (d) may be added to the solution containing the aqueous medium (b) and the monomers (a) used for emulsion-polymerization and/or the dispersion liquid after emulsion polymerization. When the basic substance (d) is added, acidic components contained in the monomers (a) are neutralized. As a result, the pH of the solution during emulsion polymerization and/or the dispersion liquid after emulsion polymerization is in an appropriate range, and the stability of the solution during emulsion polymerization and/or the dispersion liquid after emulsion polymerization is good.

Examples of basic substances (d) which may be added to the emulsion-polymerized solution and/or the dispersion liquid after emulsion polymerization include ammonia, triethylamine, sodium hydroxide, and lithium hydroxide. These basic substances (d) may be used alone or two or more thereof may be used in combination.

### [Radical polymerization initiator (e)]

The radical polymerization initiator (e) which is used when the binder polymer (P) is produced by the emulsion polymerization method is not particularly limited, and conventionally known initiator can be used. Examples of radical polymerization initiators (e) include persulfates such as ammonium persulfate and potassium persulfate; hydrogen peroxide; azo compounds; and organic peroxides such as tert-butyl hydroperoxide, tert-butyl peroxybenzoate, and cumene hydroperoxide.

In the present embodiment, when the binder polymer (P) is produced by the emulsion polymerization method, redox polymerization may be performed using a reducing agent such as sodium bisulfite, Rongalite, and ascorbic acid together with the radical polymerization initiator (e).

The amount of the radical polymerization initiator (e) added (including a reducing agent when the reducing agent is used together) with respect to 100 parts by mass of the monomers (a) is preferably 0.001 parts by mass or more and more preferably 0.002 parts by mass or more. This is because the conversion rate of the monomers (a) to the binder polymer (P) can be increased when the binder polymer (P) is produced by the emulsion polymerization method. The amount of the radical polymerization initiator (e) added with respect to 100 parts by mass of the monomers (a) is preferably 10 parts by mass or less and more preferably 5 parts by mass or less. This is because the molecular weight of the binder polymer (P) can be increased and the swelling rate of a non-aqueous secondary battery electrode containing the binder polymer (P) of the present embodiment in an electrolyte solution can be reduced. The addition amount with respect to 100 parts by mass of the monomers (a) is, for example, 0.1 parts by mass or more and 4.0 parts by mass or less, 0.3 parts by mass or more and 3.0 parts by mass or less, 0.5 parts by mass or more and 2.5 parts by mass or less, or 1.0 part by mass or more and 2.0 parts by mass or less.

### [Chain transfer agent (f)]

The chain transfer agent (f) used when the binder polymer (P) is produced by the emulsion polymerization method is used to adjust the molecular weight of the binder polymer (P) obtained by emulsion polymerization. Examples of chain transfer agents (f) include n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, and benzyl alcohol.

### [Emulsion polymerization method]

Examples of emulsion polymerization methods used when the binder polymer (P) is produced include a method in which components used in emulsion polymerization are continuously supplied into a reaction container and subjected to emulsion polymerization. The temperature during emulsion polymerization is not particularly limited, and is, for example, 30 to 90°C, preferably 50 to 85°C, and more preferably 55 to 80°C. The emulsion polymerization is preferably performed with stirring. **In** addition, it is preferable to continuously supply the monomers (a) and the radical polymerization initiator (e) to the solution during emulsion polymerization so that the concentrations of the monomers (a) and the radical polymerization initiator (e) in the solution during emulsion polymerization become uniform.

### <2. Non-aqueous secondary battery binder>

A non-aqueous secondary battery binder of the present embodiment contains the binder polymer (P) of the present embodiment. The non-aqueous secondary battery electrode binder may contain other components in addition to the binder polymer (P). Specifically, the non-aqueous secondary battery electrode binder may contain, for example, a polymer other than the binder polymer (P), a surfactant and the like.

The non-aqueous secondary battery binder is a component that remains without being volatilized even when a heating step is performed in a method of producing a non-aqueous secondary battery to be described below. Specifically, the components constituting the non-aqueous secondary battery binder are components that remain after 1 g of the non-aqueous secondary battery binder composition containing the binder polymer (P) is weighed out, placed on an aluminum plate with a diameter of 5 cm, and put into a dryer, and drying is performed at 1 atm (1,013 hPa) at a temperature of 105°C for 1 hour while circulating air in the dryer.

The content of the binder polymer (P) contained in the non-aqueous secondary battery binder is preferably 80 mass% or more, more preferably 90 mass% or more, still more preferably 95 mass% or more, and yet more preferably 98 mass% or more. This is because the effect obtained by incorporating the binder polymer (P) becomes significant.

### <3. Non-aqueous secondary battery binder composition>

A non-aqueous secondary battery binder composition of the present embodiment contains dispersed particles containing the binder polymer (P) of the present embodiment and the aqueous medium (B). In the non-aqueous secondary battery binder composition of the present embodiment, it is preferable that the dispersed particles containing the binder polymer (P) be dispersed in an emulsion state in the aqueous medium (B). Examples of forms of dispersed particles include emulsion particles containing a binder polymer (P) and a surfactant and particles containing a binder polymer (P) having a structural unit derived from a polymerizable surfactant.

The non-aqueous secondary battery binder composition may contain other components in addition to the binder polymer (P) and the aqueous medium (B). Specifically, the non-aqueous secondary battery binder composition may contain, for example, the above components used in the synthesis of the binder polymer (P).

The non-aqueous secondary battery binder composition of the present embodiment may be a dispersion liquid obtained when the binder polymer (P) is produced by the emulsion polymerization method. That is, the non-aqueous secondary battery binder composition may be an emulsion containing the binder polymer (P) and the aqueous medium (B). In addition, the non-aqueous secondary battery binder composition of the present embodiment may be a dispersion liquid obtained by dispersing the binder polymer (P), which is obtained by a method other than the emulsion polymerization method, in the aqueous medium (B). In this case, as the method of dispersing the binder polymer (P) in the aqueous medium (B), a known method can be used.

### [Average particle diameter d50 of dispersed particles containing binder polymer (P)]

The average particle diameter d50 of the dispersed particles containing the binder polymer (P) in the non-aqueous secondary battery binder composition of the present embodiment is preferably 0.18 µm or more and more preferably 0.20 µm or more. When the average particle diameter d50 is 0.18 µm or more, an electrode in which the electrode active material layer is unlikely to peel off from the current collector can be formed.

The average particle diameter d50 of the dispersed particles containing the binder polymer (P) in the non-aqueous secondary battery binder composition of the present embodiment is preferably 1.0 µm or less, more preferably 0.80 µm or less, still more preferably 0.60 µm or less, and particularly preferably 0.50 µm or less. When the average particle diameter d50 in the binder polymer (P) is 1.0 µm or less, when an electrode sheet in which the electrode active material layer 24 is formed on the current collector 23 is pressed in order to produce an electrode containing the binder polymer (P), it can be pressed under suitable pressing conditions. As a result, the electrode active material 24 can be more firmly bonded to the current collector 23.

The average particle diameter d50 of the dispersed particles containing the binder polymer (P) in the non-aqueous secondary battery binder composition of the present embodiment can be adjusted by a known method. For example, it can be adjusted by the amount of the surfactant added when the binder polymer (P) is produced by the emulsion polymerization method, selection of monomers, and the like. The average particle diameter d50 of the dispersed particles can be measured, for example, by a dynamic light scattering (DLS) method using a microtrack.

### [Aqueous medium (B)]

The aqueous medium (B) in the non-aqueous secondary battery binder composition of the present embodiment is water, a hydrophilic solvent, or a mixture thereof. Examples of hydrophilic solvents include the same hydrophilic solvents exemplified as the aqueous medium (b) used in the synthesis of the binder polymer (P). The aqueous medium (B) may be the same as or different from the aqueous medium (b) used in the synthesis of the binder polymer (P).

When the non-aqueous secondary battery binder composition is an emulsion obtained when the binder polymer (P) is produced by the emulsion polymerization method, the aqueous medium (B) may be the aqueous medium (b) used in the synthesis of the binder polymer (P). In addition, the aqueous medium (B) may be obtained by adding a new aqueous medium to the aqueous medium (b) used in the synthesis of the binder polymer (P). In addition, the aqueous medium (B) may be a medium in which a part or all of the aqueous medium (b) contained in the dispersion liquid obtained when the binder polymer (P) is produced by the emulsion polymerization method has been replaced with a new aqueous solvent. The new aqueous medium used in this case may have the same composition as the aqueous medium (b) used in the synthesis of the binder polymer (P) or may have a different composition.

### [Non-volatile content concentration of non-aqueous secondary battery binder composition]

The non-volatile content concentration of the non-aqueous secondary battery binder composition of the present embodiment is preferably 20 mass% or more, more preferably 25 mass% or more, and still more preferably 30 mass% or more. This is because the amount of the active component contained in the non-aqueous secondary battery binder composition increases. The non-volatile content concentration of the non-aqueous secondary battery binder composition can be adjusted by the content of the aqueous medium (B) contained in the non-aqueous secondary battery binder composition.

The non-volatile content concentration of the non-aqueous secondary battery binder composition is preferably 80 mass% or less, more preferably 70 mass% or less, and still more preferably 60 mass% or less. This is because an increase in viscosity of the non-aqueous secondary battery binder composition is minimized and a non-aqueous secondary battery electrode slurry can be easily produced.

### <4. Non-aqueous secondary battery electrode slurry>

Next, a non-aqueous secondary battery electrode slurry of the present embodiment will be described in detail. The non-aqueous secondary battery electrode slurry contains the binder polymer (P) of the present embodiment, an electrode active material, and an aqueous medium. The binder polymer (P) and the electrode active material contained in the non-aqueous secondary battery electrode slurry are preferably dispersed in an aqueous medium. The non-aqueous secondary battery electrode slurry may contain, in addition to the binder polymer (P), the electrode active material, and the aqueous medium, a thickener, a conductive additive, the aforementioned components used in the synthesis of the binder polymer (P) and the like.

### [Content of binder polymer (P)]

The content of the binder polymer (P) contained in the non-aqueous secondary battery electrode slurry with respect to 100 parts by mass of the electrode active material is preferably 0.50 parts by mass or more and more preferably 1.0 part by mass or more. This is because the effect obtained by incorporating the binder polymer (P) can be sufficiently exhibited.

The content of the binder polymer (P) contained in the non-aqueous secondary battery electrode slurry with respect to 100 parts by mass of the electrode active material is preferably 5.0 parts by mass or less, more preferably 4.0 parts by mass or less, and still more preferably 3.0 parts by mass or less. This is because the content of the electrode active material contained in the non-aqueous secondary battery electrode slurry can be increased.

### [Electrode active material]

The electrode active material contained in the non-aqueous secondary battery electrode slurry is a material that can intercalate/deintercalate ions serving as charge carriers such as lithium ions. The ions serving as charge carriers are preferably alkali metal ions, more preferably lithium ions, sodium ions, or potassium ions, and still more preferably lithium ions.

When the non-aqueous secondary battery electrode produced using a non-aqueous secondary battery electrode slurry is a negative electrode, the electrode active material is a negative electrode active material. The negative electrode active material preferably contains at least one of a carbon material, a silicon-containing material, and a material containing titanium. Examples of carbon materials used as the negative electrode active material include cokes such as petroleum coke, pitch coke, and coal coke, carbonized organic polymers, and graphites such as artificial graphite and natural graphite. Examples of silicon-containing materials used as the negative electrode active material include silicon alone and silicon compounds such as silicon oxide. Examples of materials containing titanium used as the negative electrode active material include lithium titanate. These materials that can be used as the negative electrode active material may be used alone or in a mixture or composite body.

The negative electrode active material preferably contains at least one of a carbon material and a silicon-containing material, and more preferably contains a carbon material. This is because the binder polymer (P) contained in the non-aqueous secondary battery electrode slurry can have a strong effect of improving the adhesion between the negative electrode active materials and between the negative electrode active material and the current collector.

When the non-aqueous secondary battery electrode produced using a non-aqueous secondary battery electrode slurry is a positive electrode, the electrode active material is a positive electrode active material. As the positive electrode active material, a material having a higher standard electrode potential than the negative electrode active material can be used. Specifically, examples of positive electrode active materials include nickel-containing lithium composite oxides such as a Ni-Co-Mn-based lithium composite oxide, a Ni-Mn-Al-based lithium composite oxide, and a Ni-CoAl-based lithium composite oxide, lithium cobalt oxide (LiCoO₂), lithium manganese spinel oxide (LiMn₂O₄), olivine lithium iron phosphate, and chalcogen compounds such as TiS₂, MnO₂, MoO₃, and V₂O₅. These materials that can be used as the positive electrode active material may be used alone or two or more thereof may be used in combination.

### [Aqueous medium]

The aqueous medium contained in the non-aqueous secondary battery electrode slurry of the present embodiment is one selected from the group consisting of water, a hydrophilic solvent, and a mixture containing water and a hydrophilic solvent. Examples of hydrophilic solvents include the same hydrophilic solvents exemplified as the aqueous medium (b) used in the synthesis of the binder polymer (P). The aqueous medium contained in the non-aqueous secondary battery electrode slurry may be the same as or different from the aqueous medium (b) used in the synthesis of the binder polymer (P).

### [Thickener]

Examples of thickeners that may be contained in the non-aqueous secondary battery electrode slurry include celluloses such as carboxymethylcellulose (CMC), hydroxyethylcellulose, and hydroxypropyl cellulose, ammonium salts of celluloses, alkali metal salts of celluloses, polyvinyl alcohol, and polyvinylpyrrolidone. The thickener preferably contains at least one of carboxymethylcellulose, ammonium salts of carboxymethylcellulose, and alkali metal salts of carboxymethylcellulose. This is because the electrode active material in the non-aqueous secondary battery electrode slurry can be easily dispersed.

The content of the thickener contained in the non-aqueous secondary battery electrode slurry with respect to 100 parts by mass of the electrode active material is preferably 0.50 parts by mass or more and more preferably 0.80 parts by mass or more. This is because the adhesion between the electrode active materials and between the current collector and the electrode active material contained in the non-aqueous secondary battery electrode produced using a non-aqueous secondary battery electrode slurry is favorable. The content of the thickener contained in the non-aqueous secondary battery electrode slurry with respect to 100 parts by mass of the electrode active material is preferably 3.0 parts by mass or less, more preferably 2.0 parts by mass or less, and still more preferably 1.5 parts by mass or less. This is because the coating properties of the non-aqueous secondary battery electrode slurry are improved.

### [Conductive additive]

Examples of conductive additives that may be contained in the non-aqueous secondary battery electrode slurry of the present embodiment include carbon black and carbon fibers. Examples of carbon black include furnace black, acetylene black, denka black (registered trademark) (commercially available from Denka Co., Ltd.), and Ketjen black (registered trademark) (commercially available from Ketjen Black International Company). Examples of carbon fibers include carbon nanotubes and carbon nanofibers. Preferable examples of carbon nanotubes include VGCF (registered trademark, commercially available from Showa Denko K.K.) which is a vapor grown carbon fiber.

### [Method of producing non-aqueous secondary battery electrode slurry]

As a method of producing a non-aqueous secondary battery electrode slurry of the present embodiment, for example, the binder polymer (P) of the present embodiment, an electrode active material, an aqueous medium, a thickener which is contained as necessary, a conductive additive which is contained as necessary, and other components contained as necessary, are mixed. The order of mixing components, which are raw materials of the non-aqueous secondary battery electrode slurry, is not particularly limited, and can be appropriately determined. Examples of methods of mixing components include a method using a stirring type, rotating type, or shaking type mixing device.

### <5. Non-aqueous secondary battery electrode>

Next, a non-aqueous secondary battery electrode of the present embodiment will be described in detail. The electrode of the present embodiment contains the binder polymer (P) of the present embodiment. As shown in FIG. 1, the electrode 20 of the present embodiment includes a current collector 23 and an electrode active material layer 24 formed on the current collector 23. The shape of the electrode 20 of the present embodiment is not particularly limited, and may be, for example, a laminate or a wound body.

The area in which the electrode active material layer 24 is formed on the current collector 23 is not particularly limited, and the electrode active material layer 24 may be formed on the entire surface of the current collector 23, and the electrode active material layer 24 may be formed on only a part of the surface of the current collector 23. When the current collector 23 has a plate or foil shape, the electrode active material layer 24 may be formed on both surfaces of the current collector 23 or may be formed on only one surface.

### [Current collector]

The current collector 23 is preferably a metal sheet with a thickness of 0.001 mm or more and 0.5 mm or less. Examples of metals that form a metal sheet include iron, copper, aluminum, nickel, and stainless steel. When the electrode 20 of the present embodiment is a negative electrode of a lithium ion secondary battery, the current collector 23 is preferably a copper foil.

### [Electrode active material layer]

The electrode active material layer 24 contains the binder polymer (P) of the present embodiment (indicated by reference numeral 21 in FIG. 1) and the electrode active material 22. The electrode active material layer 24 may contain a conductive additive, a thickener and the like. Regarding each of the electrode active material 22, the conductive additive, and the thickener, those exemplified as the components of the non-aqueous secondary battery electrode slurry can be used.

### [Method of producing non-aqueous secondary battery electrode]

The electrode 20 of the present embodiment can be produced, for example, by the following method. First, the non-aqueous secondary battery electrode slurry of the present embodiment is applied onto the current collector 23. Then, the non-aqueous secondary battery electrode slurry is dried. Therefore, the electrode active material layer 24 containing the binder polymer (P) is formed on the current collector 23 to obtain an electrode sheet. Then, as necessary, the electrode sheet is cut to an appropriate size. When the above steps are performed, the electrode 20 of the present embodiment can be obtained.

The method of applying the non-aqueous secondary battery electrode slurry onto the current collector 23 is not particularly limited, and examples thereof include a reverse roll method, a direct roll method, a doctor blade method, a knife method, an extrusion method, a curtain method, a gravure method, a bar method, a dip method, and a squeeze method. Among these application methods, in consideration of various physical properties such as viscosity of the non-aqueous secondary battery electrode slurry and drying properties, it is preferable to use any method selected from among a direct roll method, a direct roll method, a doctor blade method, a knife method, and an extrusion method. This is because an electrode active material layer with a smooth surface and a small thickness variation can be obtained.

When the non-aqueous secondary battery electrode slurry is applied to both surfaces of the current collector 23, the slurry may be applied to the surfaces sequentially one by one or applied to both surfaces simultaneously. In addition, the non-aqueous secondary battery electrode slurry may be applied onto the current collector 23 continuously or intermittently.

The amount of the non-aqueous secondary battery electrode slurry applied can be appropriately determined depending on the design capacity of the battery 20, the composition of the non-aqueous secondary battery electrode slurry, and the like.

The method of drying the non-aqueous secondary battery electrode slurry applied onto the current collector 23 is not particularly limited, and for example, methods selected from among hot air, a reduced pressure or vacuum environment, (far) infrared rays, and low-temperature air may be used alone or may be used in combination.

The drying temperature and drying time when the non-aqueous secondary battery electrode slurry is dried can be appropriately adjusted depending on the non-volatile content concentration in the non-aqueous secondary battery electrode slurry, the amount applied to the current collector 23 and the like. The drying temperature is preferably 40°C or higher and 350°C or lower, and in consideration of the productivity, it is more preferably 60°C or higher and 100°C or lower. The drying time is preferably 1 minute or longer and 30 minutes or shorter.

The electrode sheet in which the electrode active material layer 24 is formed on the current collector 23 may be cut to have an appropriate size and shape for the electrode 20. The method of cutting the electrode sheet is not particularly limited, and for example, slitting, a laser, wire cutting, a cutter, a Thomson cutter and the like can be used.

In the present embodiment, the electrode sheet may be pressed as necessary before or after the electrode sheet is cut. Thereby, the electrode active material 24 can be more firmly bonded to the current collector 23, the thickness of the electrode 20 can be reduced, and thus the size of the non-aqueous secondary battery can be reduced.

As the method of pressing the electrode sheet, a general method can be used. As the pressing method, it is particularly preferable to use a mold pressing method or a roll pressing method.

When the mold pressing method is used, the pressing pressure is not particularly limited, and is preferably 0.5 t/cm² or more and 5 t/cm² or less.

When the roll pressing method is used, the pressing load is not particularly limited, and is preferably 0.5 t/cm or more and 8 t/cm or less. This is because it is possible to obtain the above effect obtained by pressing and it is possible to minimize a decrease in the intercalation and deintercalation capacity of charge carriers such as lithium ions in the electrode active material.

### <6. Non-aqueous secondary battery>

Next, a lithium ion secondary battery will be described as a preferable example of a non-aqueous secondary battery according to the present embodiment. The configuration of the non-aqueous secondary battery of the present invention is not limited to the following example.

The lithium ion secondary battery of the present embodiment is a battery in which a positive electrode, a negative electrode, an electrolyte solution, and known components such as a separator, that are provided as necessary, are accommodated in an exterior body.

The shape of the lithium ion secondary battery may be any shape such as a coin shape, a button shape, a sheet shape, a cylindrical shape, a rectangular shape, or a flat shape.

### [Positive electrode and negative electrode]

In the lithium ion secondary battery of the present embodiment, one or both of the positive electrode and the negative electrode include the electrode active material layer of the present embodiment, which contains the binder polymer (P) of the present embodiment. In the lithium ion secondary battery of the present embodiment, among the positive electrode and the negative electrode, at least the negative electrode preferably includes the electrode active material layer containing the binder polymer (P).

In the lithium ion secondary battery of the present embodiment, when only one of the positive electrode and the negative electrode includes the electrode active material layer containing the binder polymer (P) of the present embodiment, one containing a known binder such as polyvinylidene fluoride in place of the binder polymer (P) of the present embodiment can be used as an electrode containing no binder polymer (P) of the present embodiment.

### [Electrolyte solution]

As the electrolyte solution, a non-aqueous liquid having ionic conductivity can be used. Examples of electrolyte solutions include a solution in which an electrolyte is dissolved in an organic solvent and an ionic liquid, and the former is preferable. This is because a lithium ion secondary battery with a low internal resistance can be obtained at a low production cost.

As the electrolyte, an alkali metal salt can be used, and can be appropriately selected depending on the type of the electrode active material and the like. Examples of electrolytes include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, and lithium aliphatic carboxylate. In addition, as the electrolyte, other alkali metal salts can be used.

The organic solvent in which the electrolyte is dissolved is not particularly limited, and examples thereof include carbonate compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), nitrile compounds such as acetonitrile, and carboxylic acid esters such as ethyl acetate, propyl acetate, methyl propionate, ethyl propionate, and propyl propionate. These organic solvents may be used alone or two or more thereof may be used in combination. Among these, it is preferable to use one combined with a linear carbonate solvent as the organic solvent.

### [Exterior body]

As the exterior body, for example, one formed of an aluminum laminate material made of an aluminum foil and a resin film can be appropriately used, but the present invention is not limited thereto.

### [Examples]

Hereinafter, the present invention will be described in detail with reference to examples and comparative examples. The following examples are intended to facilitate understanding of the content of the present invention. The present invention is not limited only to these examples.

In the following examples, a negative electrode of a lithium ion secondary battery was produced as an example of a non-aqueous secondary battery electrode of the present invention, a lithium ion secondary battery was produced as an example of a non-aqueous secondary battery, and the effects of the present invention were confirmed by comparison with a negative electrode of a lithium ion secondary battery and a lithium ion secondary battery according to comparative examples.

In addition, unless otherwise specified, water used in the following examples and comparative examples was ion exchanged water.

### <1. Production of binder polymer>

In examples and comparative examples, the monomer (a) in the amount shown in Table 1 to Table 3 was mixed with 200 parts by mass of water as the aqueous medium (b) and the mixture was emulsified to prepare an emulsified monomer liquid. In this example, (a5) contained a polymerizable surfactant.

Next, an aqueous solution was prepared by dissolving the radical polymerization initiator (e) in the amount shown in Table 1 to Table 3 in 50 parts by mass of water.

150 parts by mass of water was put into a separable flask including a cooling pipe, a thermometer, a stirrer, and a dropping funnel, and the temperature was raised to 80°C. The emulsified monomer liquid and the aqueous solution in which the radical polymerization initiator (e) was dissolved were continuously supplied to the separable flask over 3 hours with stirring at 80°C, and emulsion polymerization was performed to obtain emulsions containing dispersed particles containing the binder polymer of Example 1 to Example 11, and Comparative Example 1 and Comparative Example 2 and an aqueous medium.

The obtained emulsion was cooled to room temperature. Then, 133 parts by mass of water and 25 mass% of ammonia water were added. Therefore, non-aqueous secondary battery binder compositions of Example 1 to Example 11, and Comparative Example 1 and Comparative Example 2 composed of an emulsion in which dispersed particles containing the binder polymer of Example 1 to Example 11, and Comparative Example 1 and Comparative Example 2 were dispersed in an aqueous medium were prepared.

**[Table 1]**

| | | | | | | | | | | | | | |
|---|---|---|---|---|---|---|---|---|---|---|---|---|---|
| Amount of component used for preparing binder composition (parts by mass) | Component | | Compound name | Example 1 | | Example 2 | | Example 3 | | Example 4 | | Example 5 | |
| | | | | | *1 | | *1 | | *1 | | *1 | | *1 |
| | Monomer (a) | Monomer (a1) | Styrene | 188 | 47.7% | 150 | 38.1% | 188 | 48.2% | 188 | 46.8% | 188 | 44.6% |
| | | | Methyl methacrylate | | | | | | | | | | |
| | | | n-Butyl acrylate | | | | | | | | | | |
| | | | 2-Ethylhexyl acrylate | 164 | 41.6% | 202 | 51.3% | 164 | 42.0% | 164 | 40.8% | 164 | 38.9% |
| | | | 2-Hydroxyethyl methacrylate | 7.5 | 1.9% | 7.5 | 1.9% | 7.5 | 1.9% | 7.5 | 1.9% | 7.5 | 1.8% |
| | | Monomer (a2) | Acrylic acid | 15 | 3.8% | 15 | 3.8% | 15 | 3.8% | 15 | 3.7% | 15 | 3.6% |
| | | | Methacrylic acid | | | | | | | | | | |
| | | | Itaconic acid | 8.0 | 2.0% | 8.0 | 2.0% | 8.0 | 2.0% | 8.0 | 2.0% | 8.0 | 1.9% |
| | | Monomer (a3) | Polyrotaxane (SA2400C) | 7.0 | 1.8% | 7.0 | 1.8% | 3.5 | 0.9% | 15.0 | 3.7% | 35.0 | 8.3% |
| | | Monomer (a4) | Divinylbenzene | 0.2 | 0.05% | 0.2 | 0.05% | 0.2 | 0.05% | 0.2 | 0.05% | 0.2 | 0.06% |
| | | | Trimethylolpropane triacrylate | | | | | | | | | | |
| | | Monomer (a5) | Sodium p-styrenesulfonate | 2.5 | 0.6% | 2.5 | 0.6% | 2.5 | 0.6% | 2.5 | 0.6% | 2.5 | 0.6% |
| | | | Polyoxyethylene alkyl ether sulfate | 1.7 | 0.4% | 1.7 | 0.4% | 1.7 | 0.4% | 1.7 | 0.4% | 1.7 | 0.4% |
| | Polymerization initiator (e) | | Potassium persulfate | 1.0 | | 1.0 | | 1.0 | | 1.0 | | 1.0 | |
| | | | Rongalite SFS | 0.6 | | 0.6 | | 0.6 | | 0.6 | | 0.6 | |
| | Basic substance (d) | | Ammonia | 17 | | 17 | | 17 | | 17 | | 17 | |
| | Aqueous medium (b) | | Water | 583 | | 583 | | 583 | | 583 | | 583 | |
| Evaluation | Binder composition | | Non-volatile content concentration | 40 | | 40 | | 40 | | 40 | | 40 | |
| | | (mass%) | | | | | | | | | | | |
| | | Glass transition temperature (°C) | | 15 | | -2 | | 15 | | 15 | | 15 | |
| | | Particle diameter d50 (µm) | | 0.23 | | 0.25 | | 0.23 | | 0.21 | | 0.21 | |
| | Battery | Internal resistance (DCR)(Ω) | | 25 | | 25 | | 25 | | 25 | | 25 | |
| | | Discharge capacity retention rate after 500 cycles (%) | | 85 | | 85 | | 82 | | 88 | | 90 | |

| | | | | | | | | | | | | | |
|---|---|---|---|---|---|---|---|---|---|---|---|---|---|
| *1: the value in the right column of the monomer is mass% of each monomer | | | | | | | | | | | | | |

**[Table 2]**

| | | | | | | | | | | | |
|---|---|---|---|---|---|---|---|---|---|---|---|
| Amount of component used for preparing binder composition (parts by mass) | Component | | Compound name | Example 6 | | Example 7 | | Example 8 | | Example 9 | |
| | | | | | *1 | | *1 | | *1 | | *1 |
| | Monomer (a) | Monomer (a1) | Styrene | | | 152 | 38.6% | 192 | 48.7% | 188 | 47.7% |
| | | | Methyl methacrylate | 188 | 47.7% | | | | | | |
| | | | n-Butyl acrylate | | | 200 | 50.8% | | | | |
| | | | 2-Ethylhexyl acrylate | 164 | 41.6% | | | 168 | 42.6% | 164 | 41.6% |
| | | | 2-Hydroxyethyl methacrylate | 7.5 | 1.9% | 7.5 | 1.9% | | | 7.5 | 1.9% |
| | | Monomer (a2) | Acrylic acid | 15 | 3.8% | 15 | 3.8% | 15 | 3.8% | | |
| | | | Methacrylic acid | | | | | | | 15 | 3.8% |
| | | | Itaconic acid | 8.0 | 2.0% | 8.0 | 2.0% | 8.0 | 2.0% | 8.0 | 2.0% |
| | | Monomer (a3) | Polyrotaxane (SA2400C) | 7.0 | 1.8% | 7.0 | 1.8% | 7.0 | 1.8% | 7.0 | 1.8% |
| | | Monomer | Divinylbenzene | 0.2 | 0.05% | 0.2 | 0.05% | 0.2 | 0.05% | 0.2 | 0.05% |
| | | (a4) | Trimethylolpropane triacrylate | | | | | | | | |
| | | Monomer (a5) | Sodium p-styrenesulfonate | 2.5 | 0.6% | 2.5 | 0.6% | 2.5 | 0.6% | 2.5 | 0.6% |
| | | | Polyoxyethylene alkyl ether sulfate | 1.7 | 0.4% | 1.7 | 0.4% | 1.7 | 0.4% | 1.7 | 0.4% |
| | Polymerization initiator (e) | | Potassium persulfate | 1.0 | | 1.0 | | 1.0 | | 1.0 | |
| | | | Rongalite SFS | 0.6 | | 0.6 | | 0.6 | | 0.6 | |
| | Basic substance (d) | | Ammonia | 17 | | 17 | | 17 | | 17 | |
| | Aqueous medium (b) | | Water | 583 | | 583 | | 583 | | 583 | |
| Evaluation | Binder composition | | Non-volatile content concentration (mass%) | 40 | | 40 | | 40 | | 40 | |
| | | | Glass transition temperature (°C) | 15 | | 15 | | 15 | | 15 | |
| | | | Particle diameter d50 (µm) | 0.21 | | 0.21 | | 0.22 | | 0.29 | |
| | Battery | | Internal resistance (DCR)(Ω) | 22 | | 25 | | 25 | | 21 | |
| | | | Discharge capacity retention rate after 500 cycles (%) | 83 | | 85 | | 85 | | 85 | |

| | | | | | | | | | | | |
|---|---|---|---|---|---|---|---|---|---|---|---|
| *1: the value in the right column of the monomer is mass% of each monomer | | | | | | | | | | | |

**[Table 3]**

| | | | | | | | | | | | |
|---|---|---|---|---|---|---|---|---|---|---|---|
| Amount of component used for preparing binder composition (parts by mass) | Component | | Compound name | Example 10 | | Example 11 | | Comparative Example 1 | | Comparative Example 2 | |
| | | | | | *1 | | *1 | | *1 | | *1 |
| | Monomer (a) | Monomer (a1) | Styrene | 188 | 47.7% | 188 | 47.8% | 192 | 48.6% | 201 | 51.0% |
| | | | Methyl methacrylate | | | | | | | | |
| | | | n-Butyl acrylate | | | | | | | | |
| | | | 2-Ethylhexyl acrylate | 164 | 41.6% | 164 | 41.7% | 168 | 42.5% | 177 | 44.9% |
| | | | 2-Hydroxyethyl methacrylate | 7.5 | 1.9% | 7.5 | 1.9% | 7.5 | 1.9% | 7.5 | 1.9% |
| | | Monomer (a2) | Acrylic acid | 15 | 3.8% | 15 | 3.8% | 15 | 3.8% | | |
| | | | Methacrylic acid | | | | | | | | |
| | | | Itaconic acid | 8.0 | 2.0% | 8.0 | 2.0% | 8.0 | 2.0% | | |
| | | Monomer (a3) | Polyrotaxane (SA2400C) | 7.0 | 1.8% | 7.0 | 1.8% | | | 7.0 | 1.8% |
| | | Monomer (a4) | Divinylbenzene | | | | | 0.2 | 0.05% | 0.2 | 0.1% |
| | | | Trimethylolpropane triacrylate | 0.2 | 0.1% | | | | | | |
| | | Monomer (a5) | Sodium p-styrenesulfonate | 2.5 | 0.6% | 2.5 | 0.6% | 2.5 | 0.6% | | |
| | | | Polyoxyethylene alkyl ether sulfate | 1.7 | 0.4% | 1.7 | 0.4% | 1.7 | 0.4% | 1.7 | 0.4% |
| | Polymerization initiator (e) | | Potassium persulfate | 1.0 | | 1.0 | | 1.0 | | 1.0 | |
| | | | Rongalite SFS | 0.6 | | 0.6 | | 0.6 | | 0.6 | |
| | Basic substance (d) | | Ammonia | 17 | | 17 | | 17 | | 17 | |
| | Aqueous medium (b) | | Water | 583 | | 583 | | 583 | | 583 | |
| Evaluation | Binder composition | | Non-volatile content concentration (mass%) | 40 | | 40 | | 40 | | 40 | |
| | | | Glass transition temperature (°C) | 15 | | 15 | | 15 | | 15 | |
| | | | Particle diameter d50 (µm) | 0.23 | | 0.23 | | 0.23 | | 0.27 | |
| | Battery | | Internal resistance (DCR)(Ω) | 25 | | 28 | | 25 | | 30 | |
| | | | Discharge capacity retention rate after 500 | 83 | | 83 | | 75 | | 70 | |
| | | cycles (%) | | | | | | | | | |

| | | | | | | | | | | | |
|---|---|---|---|---|---|---|---|---|---|---|---|
| *1: the value in the right column of the monomer is mass% of each monomer | | | | | | | | | | | |

The amount of ammonia as the basic substance (d) shown in Table 1 to Table 3 is the amount of ammonia (parts by mass) contained in ammonia water.

The amount of water as the aqueous medium (b) shown in Table 1 to Table 3 is the total amount (parts by mass) of water contained in the non-aqueous secondary battery binder composition.

The polyrotaxane (SA2400C) in the monomer (a3) shown in Table 1 to Table 3 is SeRM (registered trademark) Key Mixture SA2400C (commercially available from Advanced Softmaterials Inc.), which is a polyrotaxane including a cyclic molecule having a cyclic framework composed of an α-cyclodextrin to which an acryloyl group is bonded, and a chain molecule having adamantyl groups at both ends and made of a polyethylene glycol having a number-average molecular weight of 20,000.

The monomer (a5) is polyoxyethylene alkyl ether sulfate (Aqualon KH-10, commercially available from DKS Co., Ltd.), which is a polymerizable surfactant.

Rongalite SFS as the polymerization initiator (e) is a product name of Rongalite (commercially available from Sumitomo Seika Chemicals Co., Ltd.).

### <2. Evaluation of binder polymer and non-aqueous secondary battery binder composition>

The glass transition point (Tg) and particle diameter (d50) of the binder polymers of Example 1 to Example 11, and Comparative Example 1 and Comparative Example 2 were measured by the following methods. The results are shown in Table 1 to Table 3.

In addition, the non-volatile content concentrations of the non-aqueous secondary battery binder compositions of Example 1 to Example 11, and Comparative Example 1 and Comparative Example 2 were measured by the following method. The results are shown in Table 1 to Table 3.

### [Glass transition point Tg]

A film with a thickness of 2 mm formed of the binder polymer was obtained by a method of applying the non-aqueous secondary battery binder composition onto a release polyethylene terephthalate (PET) film and drying it at 50°C for 5 hours.

A square test piece with a length of 2 mm and a width of 2 mm was cut out from the obtained film. The test piece was sealed in an aluminum pan, and differential scanning calorimetry (DSC) measurement of the test piece was performed using a differential scanning calorimeter (EXSTAR DSC/SS7020, commercially available from Hitachi High-Tech Science Corporation) at a temperature increase rate of 10°C/min under a nitrogen gas atmosphere. The temperature range of the DSC measurement was -40°C to 200°C. Then, the peak top temperature of the DDSC chart obtained as a temperature differential of the DSC was measured, and this temperature was defined as the glass transition point Tg (°C) of the binder polymer.

### [Particle diameter (d50) of dispersed particles containing binder polymer]

The non-aqueous secondary battery binder composition was measured using a NANOTORAC WAVE II (commercially available from MicrotracBel Corp.) at room temperature by the dynamic light scattering (DLS) method and the particle diameter (d50) of the binder polymer was obtained.

### [Non-volatile content concentration]

1 g of the non-aqueous secondary battery binder composition was weighed out, placed on an aluminum plate with a diameter of 5 cm, and put into a dryer. While circulating air in the dryer, drying was performed at 1 atm (1,013 hPa), a temperature of 105°C for 1 hour, and the mass of the remaining components was measured. The mass percentage (mass%) of the components remaining after drying relative to the mass (1 g) of the non-aqueous secondary battery binder composition before drying was calculated and defined as the non-volatile content concentration (mass%).

### <3. Production of non-aqueous secondary battery>

Negative electrodes were produced using the non-aqueous secondary battery binder compositions of Example 1 to Example 11, and Comparative Example 1 and Comparative Example 2 by the following method, and lithium ion secondary batteries, which are non-aqueous secondary batteries of Example 1 to Example 11, and Comparative Example 1 and Comparative Example 2, were produced using the negative electrodes.

### [Production of positive electrode]

94 parts by mass of LiNi_{0.6}Mn_{0.2}Co_{0.2}O₂ as a positive electrode active material, 3 parts by mass of acetylene black as a conductive additive, and 3 parts by mass of polyvinylidene fluoride as a binder were mixed to obtain a mixture. 50 parts by mass of N-methylpyrrolidone was added to the obtained mixture, and the mixture was additionally mixed to obtain a positive electrode slurry.

An aluminum foil with a thickness of 15 µm was prepared as a positive electrode current collector. The positive electrode slurry was applied to both surfaces of the positive electrode current collector by a direct roll method. The amount of the positive electrode slurry applied to the positive electrode current collector was adjusted so that the thickness after a roll press treatment to be described below was 125 µm per one surface.

The positive electrode slurry applied onto the positive electrode current collector was dried at 120°C for 5 minutes and pressed using a roll press (commercially available from Thank-Metal Co., Ltd., a pressing load of 5 t/cm and a roll width of 7 cm) by a roll pressing method to obtain a positive electrode sheet having positive electrode active material layers on both surfaces of the positive electrode current collector. The obtained positive electrode sheet was cut into a rectangle with a length of 50 mm and a width of 40 mm, and a conductive tab was attached to obtain a positive electrode.

### [Production of negative electrode (non-aqueous secondary battery electrode)]

96.9 parts by mass of artificial graphite (G49, commercially available from Jiangxi Zichen Technology Co., Ltd.) as a negative electrode active material, 3.6 parts by mass (1.4 parts by mass of the non-volatile content (binder polymer)) of any of the non-aqueous secondary battery binder compositions prepared in Example 1 to Example 11, and Comparative Example 1 and Comparative Example 2, and 60 parts by mass of an aqueous solution containing 2 mass% of CMC (carboxymethylcellulose-sodium salt, Sunrose (registered trademark) MAC500LC, commercially available from Nippon Paper Chemicals Co., Ltd.) were mixed, 16 parts by mass of water was additionally added, and the mixture was mixed using a rotation and revolution mixer (ARE-310, commercially available from Thinky Corporation) to obtain a negative electrode slurry (non-aqueous secondary battery electrode slurry).

A copper foil with a thickness of 10 µm was prepared as a negative electrode current collector. The negative electrode slurry was applied to both surfaces of the negative electrode current collector by a direct roll method. The amount of the negative electrode slurry applied to the negative electrode current collector was adjusted so that the thickness after a roll press treatment to be described below was 170 µm per one surface.

The negative electrode slurry applied onto the negative electrode current collector was dried at 90°C for 10 minutes and pressed using a roll press (commercially available from Thank-Metal Co., Ltd., a pressing load of 8 t/cm and a roll width of 7 cm) by a roll pressing method to obtain a negative electrode sheet having negative electrode active material layers on both surfaces of the negative electrode current collector. The obtained negative electrode sheet was cut into a rectangle with a length of 52 mm and a width of 42 mm, and a conductive tab was attached to obtain a negative electrode.

### [Production of non-aqueous secondary battery]

A positive electrode and a negative electrode with a separator (made of a polyethylene, a thickness of 25 µm) made of a polyolefin porous film inserted therebetween were laminated so that a positive electrode active material layer faced a negative electrode active material layer, and were housed in an exterior body (battery pack) made of an aluminum laminate material. Then, an electrolyte solution was injected into the exterior body, vacuum impregnation was performed, and packing was performed with a vacuum heat sealer to obtain a lithium ion secondary battery.

As the electrolyte solution, an electrolyte solution was used in which 1 part by mass of vinylene carbonate and 99 parts by mass of a solution in which LiPF₆ was dissolved at a concentration of 1.0 mol/L in a mixed solvent, which contains ethylene carbonate (EC), ethyl methyl carbonate (EMC) and diethyl carbonate (DEC) at a volume ratio of EC:EMC:DEC=30:50:20, were mixed.

### <4. Evaluation of non-aqueous secondary battery>

The internal resistance and the discharge capacity retention rate after 500 cycles of the lithium ion secondary batteries of Example 1 to Example 11, and Comparative Example 1 and Comparative Example 2 were evaluated by the following methods. The results are shown in Table 1 to Table 3.

### [Internal resistance (DCR)]

Under conditions of 25°C, the internal resistance (DCR (Ω)) of the lithium ion secondary battery was measured by the following procedure. That is, the battery was charged at a constant current of 0.2C from the rest potential to a voltage of 3.6 V and the state of charge was set to 50% (SOC 50%) of the initial capacity. Then, the battery was discharged for 60 seconds at current values of 0.2C, 0.5C, 1C and 2C. The internal resistance DCR(Ω) at an SOC of 50% was determined from the relationship between these four current values (values for 1 second) and the voltage.

### [Discharge capacity retention rate after 500 cycles]

Under conditions of 45°C, charging and discharging were performed wherein one cycle includes a series of operations shown in the following steps (i) to (iv). The time integration value of the current in steps (i) and (ii) was defined as the charge capacity, and the time integration value of the current in step (iv) was defined as the discharge capacity. Then, the discharge capacity at the 1st cycle and the discharge capacity at the 500th cycle were measured, and the discharge capacity retention rate after 500 cycles was calculated by the following formula. Discharge capacity retention rate (%)=100×(discharge capacity at 500th cycle/discharge capacity at 1st cycle)

(i) Charge at a current of 1C until the voltage reaches 4.2 V (constant current (CC) charge).
(ii) Charge at a voltage of 4.2 V until the current reaches 0.05C (constant voltage (CV) charge).
(iii) Let rest for 30 minutes.
(iv) Discharge at a current of 1C until the voltage reaches 2.75 V (constant current (CC) discharge)

### <5. Evaluation results>

As shown in Table 1 to Table 3, it was confirmed that the lithium ion secondary batteries of Example 1 to Example 11 all had a higher capacity retention rate than the lithium ion secondary batteries of Comparative Example 1 and Comparative Example 2. This is speculated to be because the binder polymers contained in the negative electrodes of the lithium ion secondary batteries of Example 1 to Example 11 were copolymers containing the structural units derived from the monomer (a1) to the monomer (a3) shown in Table 1 to Table 3.

Particularly, the lithium ion secondary battery of Example 5 had a capacity retention rate of 90%, and had excellent cycle characteristics. This is speculated to be because, in the binder polymer contained in the negative electrode of the lithium ion secondary battery of Example 5, the content of the monomer (a3) in the total amount of the monomers (a) (the content of the third structural unit in all structural units) was 4.1 mass% or more.

In addition, as shown in Table 1 to Table 3, it was confirmed that the lithium ion secondary batteries of Example 1 to Example 11 and Comparative Example 1 and Comparative Example 2 had sufficiently low values for practical use in terms of the internal resistance, which is a secondary effect.

### INDUSTRIAL APPLICABILITY

The present invention provides a non-aqueous secondary battery binder polymer that can be used as a binder material to form an electrode to obtain a non-aqueous secondary battery having excellent cycle characteristics.

### REFERENCE SIGNS LIST

1 Cyclic molecule
2 Stopper group
3 Chain molecule
4 Group containing ethylenically unsaturated bond
10 Polyrotaxane
11 Opening
20 Electrode
21 Thickener
22 Electrode active material
23 Current collector
24 Electrode active material layer
25 Binder

## Claims

1. A non-aqueous secondary battery binder polymer, comprising:
a first structural unit derived from a monomer (a1);
a second structural unit derived from a monomer (a2); and
a third structural unit derived from a monomer (a3),
wherein
the monomer (a1) is a non-ionic compound having only one ethylenically unsaturated bond,
the monomer (a2) is a compound having a carboxy group and only one ethylenically unsaturated bond, and
the monomer (a3) is a polyrotaxane including
a cyclic molecule having a cyclic framework to which a group containing an ethylenically unsaturated bond is bonded and
a chain molecule that passes through an opening of the cyclic molecule and has stopper groups at both ends.

2. The non-aqueous secondary battery binder polymer according to claim 1,
wherein at least one of the group containing an ethylenically unsaturated bond bonded to the cyclic framework is a (meth)acryloyl group, a vinyl group, an allyl group, or a propenyl group.

3. The non-aqueous secondary battery binder polymer according to claim 1,
wherein at least one of the group containing an ethylenically unsaturated bond bonded to the cyclic framework is a (meth)acryloyl group.

4. The non-aqueous secondary battery binder polymer according to claim 1,
wherein at least one of the cyclic framework in the cyclic molecule of the monomer (a3) is a crown ether framework, a cyclic siloxane framework, or a cyclic oligosaccharide framework.

5. The non-aqueous secondary battery binder polymer according to claim 1,
wherein at least one of the cyclic framework in the cyclic molecule of the monomer (a3) is an α-cyclodextrin framework.

6. The non-aqueous secondary battery binder polymer according to claim 1,
wherein at least one of the stopper groups is a dinitrophenyl group, an adamantyl group, a trityl group, or a derivative group of any of these groups.

7. The non-aqueous secondary battery binder polymer according to claim 1,
wherein at least one of the stopper groups is an adamantyl group.

8. The non-aqueous secondary battery binder polymer according to claim 1,
wherein the chain molecule is at least one selected from among polyethylene glycol, polypropylene glycol, polyisoprene, polyisobutylene, polybutadiene, polytetrahydrofuran, polyacrylic acid ester, polydimethylsiloxane, polyethylene, and polypropylene.

9. The non-aqueous secondary battery binder polymer according to claim 1,
wherein the chain molecule is polyethylene glycol.

10. The non-aqueous secondary battery binder polymer according to claim 1,
wherein the number-average molecular weight of the chain molecule is 5,000 to 50,000.

11. The non-aqueous secondary battery binder polymer according to claim 1, further comprising a fourth structural unit derived from a monomer (a4),
wherein the monomer (a4) is a compound having a plurality of independent ethylenically unsaturated bonds.

12. The non-aqueous secondary battery binder polymer according to claim 11,
wherein the content of the fourth structural unit in all structural units is 0.010 mass% or more and 10 mass% or less.

13. The non-aqueous secondary battery binder polymer according to claim 1,
wherein at least one of the monomers (a1) is an aromatic compound having an ethylenically unsaturated bond, and
wherein the content of the structural unit derived from the aromatic compound having an ethylenically unsaturated bond in all structural units is 41 mass% or more.

14. The non-aqueous secondary battery binder polymer according to claim 1,
wherein the content of the second structural unit in all structural units is 0.10 mass% or more and 20 mass% or less.

15. The non-aqueous secondary battery binder polymer according to claim 1,
wherein the content of the third structural unit in all structural units is 0.010 mass% or more and 15 mass% or less.

16. The non-aqueous secondary battery binder polymer according to claim 15,
wherein the content of the third structural unit in all structural units is 4.1 mass% or more.

17. A non-aqueous secondary battery binder composition, comprising
dispersed particles containing the non-aqueous secondary battery binder polymer according to any one of claims 1 to 16, and an aqueous medium.

18. The non-aqueous secondary battery binder composition according to claim 17,
wherein the average particle diameter d50 of the dispersed particles is 0.18 µm or more and 1.0 µm or less.

19. A non-aqueous secondary battery electrode slurry, comprising
the non-aqueous secondary battery binder polymer according to any one of claims 1 to 16, an electrode active material, and an aqueous medium,
wherein the aqueous medium is one selected from the group consisting of water, a hydrophilic solvent, and a mixture containing water and a hydrophilic solvent.

20. A non-aqueous secondary battery electrode comprising the non-aqueous secondary battery binder polymer according to any one of claims 1 to 16.

21. A non-aqueous secondary battery comprising the non-aqueous secondary battery electrode according to claim 20.

22. A method of producing a non-aqueous secondary battery binder polymer, comprising
a polymerization step in which monomers including a monomer (a1), a monomer (a2), and a monomer (a3) are copolymerized,
wherein
the monomer (a1) is a non-ionic compound having only one ethylenically unsaturated bond,
the monomer (a2) is a compound having a carboxy group and only one ethylenically unsaturated bond, and
the monomer (a3) is a polyrotaxane including a cyclic molecule having a cyclic framework to which a group containing an ethylenically unsaturated bond is bonded and a chain molecule that passes through an opening of the cyclic molecule and has stopper groups at both ends.
